# EUROPÄISCHE PATENTANMELDUNG

(11) **EP 4 703 604 A1**
(43) Veröffentlichungstag der Anmeldung: **04.03.2026**
(21) Anmeldenummer: 24196434.5
(22) Anmeldetag: 26.08.2024
(51) Int. Cl.: F16H 57/021, F03D 13/10, F03D 15/00, F16H 57/023, F16H 1/48

(54) **GETRIEBEANTRIEBSSTRANG MIT VERKIPPUNGSAUSGLEICH**

(71) Anmelder: Flender GmbH, 46395 Bocholt (DE)
(72) Erfinder: HAMBRECHT, Ralf, 46395 Bocholt (DE); KAMPS, Alexander, 46395 Bocholt (DE); VRIESEN, Johannes, 46395 Bocholt (DE)
(74) Vertreter: Michalski Hüttermann & Partner Patentanwälte mbB

(57) **Zusammenfassung**

Getriebeantriebsstrang 10 mit einer Triebstrangachse A_{D} für eine Windkraftanlage, umfassend eine erste und zumindest eine weitere Getriebekomponente 12, 20 mit jeweils einer Mittelachse A_{M1}, A_{M2}, wobei die ersten Getriebekomponente 12 zumindest einen Planetenradträger 14 mit darin aufgenommenen Planeten einer ersten Planetenstufe 22, ein erstes Gehäuseelement 28 als Flanschabschnitt mit einer aufgenommenen Lagerung 16 für den Planetenradträger 14 und ein zweites Gehäuseelement 30 als Hohlrad aufweist und die zweite Getriebekomponente 20 zumindest eine weitere Planetenstufe und/oder Stirnradstufe 26 aufweist. In einem Zustand, in der eine Gewichtskraft F_{RG} der zumindest einen weiteren Getriebekomponente 20 nicht auf diese Getriebekomponente 20 wirksam ist, steht die Mittelachse A_{M2} der zumindest einen weiteren Getriebekomponente 20 unter einem Winkelbetrag +α_{VK} zu der Triebstrangachse A_{D}. In einem belasteten Zustand ist die Verkippung zwischen der Verzahnung aufgehoben.

## Beschreibung

Die Erfindung betrifft eine Getriebeantriebsstrang mit einer Triebstrangachse A_{D} für eine Windkraftanlage, mit einer ersten und zumindest einer weiterer Getriebekomponente mit jeweils einer Mittelachse A_{M1}, A_{M2}, wobei die ersten Getriebekomponente zumindest einen Planetenradträger mit darin aufgenommenen Planeten einer ersten Planetenstufe, ein erstes Gehäuseelement als Flanschabschnitt mit einer aufgenommenen Lagerung für den Planetenradträger und ein zweites Gehäuseelement als Hohlrad aufweist und die zweite Getriebekomponente zumindest eine weitere Planeten- und/oder Stirnradstufe aufweist.

Für Windkraftanlagen können sogenannte Vierpunkt-Lagerungen - auch aufgelöste Lagerung genannt - mit doppelt gelagerter Rotorwelle zur Aufnahme von Biegemomenten und angebundener Getriebe/Generator-Einheit mit Drehmomentstütze vorgesehen sein. Bei dieser Konfiguration wird die Gewichtskraft der Getriebe/Generator-Einheit nicht von der Umgebungsstruktur - in der Regel der Maschinenträger zur Anbindung an den Turm - getragen, sondern von der Rotorwelle und deren Lagerung im Lagergehäuse. Als Gegengewicht zu der Gewichtskraft der Getriebe/Generator-Einheit fungiert die Gewichtskraft des Rotors und der Rotornabe.

Für Windkraftanlagen können allerdings auch sogenannte Zweipunkt-Lagerungen mit biegeweicher Kupplung zwischen Rotorwelle und Getriebeeingang vorgesehen sein. Der Getriebeeingang wird hier in der Regel von einem Planetenradträger gebildet. Der Planetenradträger wird hierbei nicht vollständig von der Rotorwelle getragen, sondern stützt sich über eine Trägerlagerung an der Umgebungsstruktur ab. Durch sein Eigengewicht und Lagernachgiebigkeiten erzeugt er in der Lagerung eine Verformung, die zu einer ungünstigen Verkippung in der Verzahnung führen kann. Diesen Effekt gibt es insbesondere bei einer einseitigen Lagerung oder relevanter Einsenkung aufgrund hoher Planetenträgergewichtslast bzw. hoher Lagernachgiebigkeit. Die Verkippung in der Verzahnung führt zu einer ungleichmäßigen und ungünstigen Belastung und muss in der Dimensionierung mitberücksichtigt werden, was zu schwereren Auslegungen oder zu Getrieben mit geringerer Drehmomenttragfähigkeit führt. Es besteht ein ständiges Bedürfnis die Verkippung in der Verzahnung zu minimieren, bestenfalls sogar zu eliminieren.

Es ist die Aufgabe der Erfindung Maßnahmen aufzuzeigen, die die Verkippung in der Verzahnung zumindest minimieren.

Die Lösung der Aufgabe erfolgt durch einen Getriebeantriebsstrang mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Getriebeantriebsstrang mit einer Triebstrangachse A_{D} für eine Windkraftanlage, umfassend eine erste und zumindest eine weitere Getriebekomponente mit jeweils einer Mittelachse A_{M1}, A_{M2}, wobei die ersten Getriebekomponente zumindest einen Planetenradträger mit darin aufgenommenen Planeten einer ersten Planetenstufe, ein erstes Gehäuseelement als Flanschabschnitt mit einer aufgenommenen Lagerung für den Planetenradträger und ein zweites Gehäuseelement als Hohlrad aufweist und die zweite Getriebekomponente zumindest eine weitere Planeten- und/oder Stirnradstufe aufweist, wobei in einem Zustand, in der eine Gewichtskraft der zumindest einen weiteren Getriebekomponente nicht auf diese Getriebekomponente wirksam ist, die Mittelachse A_{M2} der zumindest einen weiteren Getriebekomponente unter einem Winkelbetrag α_{VK} zu der Triebstrangachse A_{D} steht.

Ein Zustand, in der die Gewichtskraft nicht auf die Getriebekomponente wirkt, kann auch als entlasteter bzw. unbelasteter Zustand bezeichnet werden. In einem solchen Zustand wird die Getriebekomponente nicht von der eigenen Gewichtskraft belastet, so dass es keine Verformungen infolge von Materialnachgiebigkeiten gibt. Auch ein Spiel zwischen beweglichen Teilen wird nicht zur einen Seite hin ausgenutzt, sondern befindet sich mittig in seinem Spiel- bzw. Toleranzbereich. Dieser Zustand, in dem die eigene Gewichtskraft nicht wirksam ist, kann zunächst einmal auch als ein virtueller Zustand beschrieben werden, auf den in der Konstruktionsphase in einem entsprechenden Berechnungsprogramm ausgelegt wird. Rein praktisch gesehen kann dieser Zustand, in dem die eigene Gewichtskraft nicht wirksam ist, aber auch während der Montage der Windkraftanlage, bei der ein solcher Getriebeantriebsstrang zum Einsatz kommt, erreicht werden und zwar in dem Augenblick, in dem der Getriebeantriebsstrang und die entsprechenden Getriebekomponenten noch an einem Montagekran hängen, aber bereits an die restliche Struktur der Windkraftanlage angebracht wurden. Denkbar ist auch, dass dieser unbelastete Zustand erreicht wird, wenn die Getriebekomponenten und benachbarte Bauteile, bspw. ein Hauptlagergehäuse, auf einem ebenen Untergrund miteinander verbunden werden, so dass die Gewichtskraft von dem Untergrund abgestützt wird und nicht von den Verbindungsmitteln zwischen den Bauteilen.

In dem beschriebenen unbelasteten Zustand kann konkret vorgesehen sein, dass die zweite Mittelachse A_{M2} ausgehend von einem Schnittpunkt mit der ersten Mittelachse A_{M1} in der Richtung der zumindest zweiten Getriebekomponente nach vertikal oben geneigt ist. In dem beschriebenen unbelasteten Zustand ist die Mittelachse A_{M2} der zumindest einen weiteren Getriebekomponente unter einem Winkelbetrag α_{VK} zu der Triebstrangachse A_{D} angeordnet, so dass zwischen den Verzahnungen eine Verkippung herrscht. Diese Verkippung in dem unbelasteten Zustand ist allerdings unbeachtlich, da sich der Getriebeantriebsstrang nicht in Betrieb befindet. Wird nun der unbelastete Zustand aufgelöst, so wirkt das infolge der Gewichtskraft der zumindest einen weiteren Getriebekomponente resultierende Kippmoment und es kommt zu einem Einfedern der zumindest einen weiteren Getriebekomponente und die Verkippung in der Verzahnung reduziert sich oder wird sogar aufgelöst.

Durch den vorgeschlagenen Getriebeantriebsstrang kann der negative Effekt der Verkippung der Verzahnung insbesondere der ersten Planetenstufe vermieden oder zumindest so weit reduziert werden, dass ein deutlich besseres Tragverhalten der Verzahnungen erzielt wird. In vorteilhafter Weise wird durch ein winkliges Ausrichten der Mittelachse der ersten Planetenstufe zu der Mittelachse der zweiten oder weiterer Planetenstufen einschließlich deren Gehäusebestandteile, und zwar bezogen auf einen gewichtskraftfreien Zustand dieser zweiten oder weiterer Planetenstufen, die Verkippung in der langsamen Planetenstufe zwischen Hohlrad bzw. dessen Innenverzahnung und Planetenträger - Eingriff der Planetenräder in die Innenverzahnung - sowie zwischen Sonnenrad und Planetenträger - Eingriff der Planetenräder in das Sonnenrad - vermieden. Der vorgeschlagene Getriebeantriebsstrang trägt den immer größer werdenden Leistungen der Windkraftanlagen Rechnung und damit einhergehend dem steigenden Gewicht von Getriebe und Generator sowie der Vergrößerung der Abmessungen und damit dem Hebel für das durch die Gewichtskraft verursachte Kippmoment. Das entstehende Kippmoment muss demnach nicht mehr durch Überdimensionierung der betroffenen Maschinenelemente - Rotorwelle, Rotorlager, Planetenträger, Planetenträgerlager und Getriebe-Rotorflansch - ausgeglichen werden. Auch kann auf eine im Hinblick auf die mögliche Lastüberhöhungen nachteilige Gewichtkraftabstützung zwischen Getriebe-Generator-Einheit und Maschinenträger verzichtet werden.

In möglichen bevorzugten Ausgestaltungen des Getriebeantriebsstrangs weist der um die Mittelachse A_{M1} angeordnete Flanschabschnitt eine Anlagefläche auf, wobei die Anlagefläche unter dem Winkelbetrag 90°+(α_{VK}) oder unter dem Winkelbetrag (-α_{VK}) oder unter dem Winkelbetrag (+α_{VK}) zu der Triebstrangachse A_{D} steht. Bei diesen Möglichkeiten sorgt der Flanschabschnitt dafür, dass in dem unbelasteten Zustand die beiden Mittelachsen A_{M1} und A_{M2} winklig zueinander stehen. Hierbei ist bevorzugt die erste Möglichkeit darüber realisiert, dass der Flanschabschnitt über die unter dem Winkelbetrag 90°+α_{VK} zu der Triebstrangachse A_{D} stehenden Anlagefläche an dem Hohlrad befestigt ist. Vorteilhaft bleibt das Hohlrad baulich und konstruktiv unverändert. Bezogen auf einen kompletten Antriebsstrang einer Windkraftanlage kann das als Flanschabschnitt ausgeführt erste Gehäuseelement als Drehmomentstütze dienen und entweder rotorseitig der ersten Planetenstufe oder auf der rotorabgewandten Seite der ersten Planetenstufe angeordnet sein.

Die beiden weiteren Möglichkeiten sind darüber realisiert, dass es sich bei dem Flanschabschnitt, dessen Anlagefläche unter dem Winkelbetrag -α_{VK} oder unter dem Winkelbetrag +α_{VK} zu der Triebstrangachse A_{D} steht, um eine Bohrung zur Aufnahme der Lagerung für den Planetenradträger handelt.

Eine bevorzugte Ausgestaltung der Lagerung für beide der genannten Möglichkeiten sieht vor, dass der Planetenradträger über ein einseitiges Führungslager in dem als Flanschabschnitt ausgeführten ersten Gehäuseelement oder auf der dem ersten Gehäuseelement abgewandten Seite in dem Gehäuseelement gelagert ist.

In einer alternativ bevorzugten Ausgestaltung weist eine Mittelachse A_{M3} des Hohlrades einen ersten radialen Versatz Vᵣ₁ gegenüber dem um die Mittelachse A_{M1} angeordneten Flanschabschnitt auf. Hierbei wird von der herkömmlichen koaxialen Ausrichtung und Montage der Symmetrieachsen der Bauteile gezielt abgewichen, um vorteilhafterweise in dem unbelasteten Zustand die beiden Mittelachsen A_{M1} und A_{M2} winklig zueinander anzuordnen. In einem einfachen Fall kann es ausreichen, das Hohlrad bezogen auf den Flanschabschnitt lediglich innerhalb des jeweils bestehenden Lochbildes mit dem radialen Versatz Vᵣ₁ zueinander zu montieren. Darüberhinausgehend kann aber auch vorgesehen sein, dass das Lochbild des Hohlrades oder zusätzlich auch das Lochbild des Flanschabschnitts mit dem beabsichtigten Versatz Vᵣ₁ gefertigt wird und dann entsprechend mit dem versetzten Lochbild montiert wird.

In einer zudem bevorzugten Ausgestaltung kann vorgesehen sein, dass die Mittelachse A_{M2} der zweiten Getriebekomponente einen zweiten radialen Versatz Vᵣ₂ gegenüber dem um die Mittelachse A_{M1} angeordneten Flanschabschnitt aufweist. Insbesondere kann hierbei vorgesehen sein, dass der erste radiale Versatz Vᵣ₁ entgegengesetzt zu dem zweiten radialen Versatz Vᵣ₂ gerichtet ist. Bei der beschriebenen alternativ bevorzugten Ausgestaltung kann vorgesehen sein, dass der Planetenradträger der ersten Getriebekomponente über eine weitere Lagerung gegenüber der zweiten Getriebekomponente gelagert ist.

Zusammenfassend kann zu den beschriebenen Ausgestaltungen gesagt werden, dass in einem entlasteten bzw. unbelasteten Zustand die zweite Mittelachse A_{M2} ausgehend von einem Schnittpunkt mit der ersten Mittelachse A_{M1} in der Richtung der zumindest zweiten Getriebekomponente nach vertikal oben geneigt ist. Im Betrieb bzw. nach der Endmontage ergibt sich für die oben beschriebenen Fälle ein durch die Gewichtskraft induziertes Kippmoment eine Verkippung um -α_{VK} und damit stellt sich eine Kompensation der initialen Verkippung im unbelasteten Zustand ein.

Die Höhe der Abweichung der Winkligkeit von α_{VK} wird in Abhängigkeit des Planetenträgerlagerspiels, des Abstandes der Planetenträgerlager, der Nachgiebigkeit der Planetenträgerlager, der Nachgiebigkeit der Stützstruktur der Planetenträgerlager und der Höhe des zu erwartenden Kippmomentes festgelegt. Die Größe kann im Vorfeld sehr gut festgelegt werden, da es sich um konstruktive Größen handelt, die bekannt sind bzw. sich im Konstruktionsprozess ermitteln lassen. Die Auslegung und Einstellung wird optimalerweise so gewählt, dass die Verkippung komplett kompensiert wird.

Die Aufgabe wird ferner gelöst durch eine Windkraftanlage, umfassend einen Rotorflansch mit einem Rotor und einen Generator, wobei ein den Rotorflansch mit dem Generator verbindender Getriebeantriebsstrang vorgesehen ist, dadurch gekennzeichnet, dass der Getriebeantriebsstrang wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage,
Fig. 2: schematisch und auszugsweise einen Getriebeantriebsstrang,
Fig. 3 bis 5: eine erste Ausführung eines Getriebeantriebsstrangs zur Kompensation eines winkligen Abkippens,
Fig. 6: eine weitere Ausführung eines Flanschabschnitts zur Kompensation eines winkligen Abkippens und
Fig. 7, 8: eine weitere Ausführung eines Getriebeantriebsstrangs 10 zur Kompensation des winkligen Abkippens.

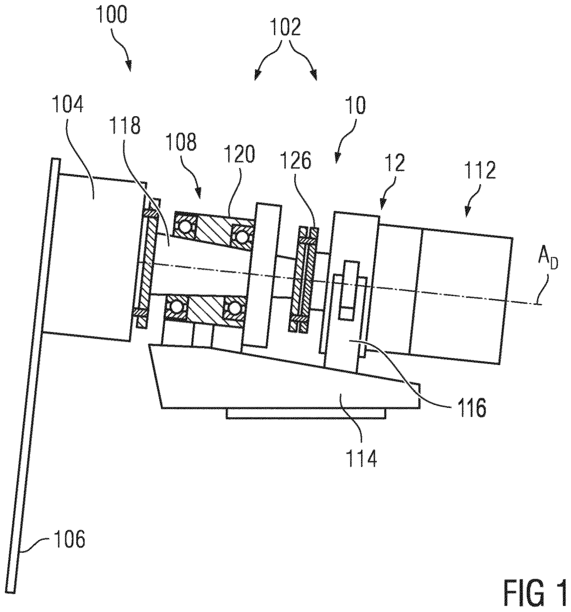

Die Figur 1 zeigt in schematischer und nicht maßstabsgetreuer Darstellung eine Windkraftanlage 100 in einer möglichen Ausführung. Gezeigt ist eine Seitendarstellung. Wesentliches Element der Windkraftanlage 100 ist ein Antriebstrang 102, der vorliegend strukturell einen Rotorflansch 104 mit einem Rotor 106, eine Rotorlagerung 108, eine Getriebekomponente 12 und einen Generator 112 umfassen kann. Über einen Maschinenträger 114 werden zumindest die Rotorlagerung 108 und der Generator 112 über einen nicht dargestellten Turm auf einem Boden abgestützt. Die Rotorlagerung 108 umfasst eine Rotorwelle 118, die z.B. über eine angestellte Kegelrollenlagerung gegenüber einem Rotorlagergehäuse 120 der Rotorlagerung 108 drehbar um eine Triebstrangachse A_{D} gelagert ist. Die Triebstrangachse A_{D} bestimmt eine axiale Richtung.

An einem Ende der Rotorwelle 118 ist der Rotorflansch 104 und an diesem der Rotor 106 gehalten. Das andere Ende der Rotorwelle 118 ist eine Getriebekomponente 12 antriebsmäßig verbunden, um ein von dem Rotor 106 aufgebrachtes Antriebsmoment zu übersetzen. Die Getriebekomponente 12 ist als Planetengetriebe mit einer oder mehreren Planetenstufen ausgeführt. Die Getriebekomponente 12 ist antriebsmäßig mit dem Generator 112 verbunden. Über einen Flansch 126 ist die Rotorwellenlagerung 108 mit der Getriebekomponente 12 verbunden. Ein Reaktionsmoment der Getriebekomponente 12 - und auch des angeflanschtes Generators 112 - ist über eine Drehmomentstütze 116 gegenüber dem Maschinenträger 114 abgestützt. Hierbei kann in einer ersten Variante die Drehmomentstütze 116 - wie in der Figur 1 dargestellt - die Getriebekomponente 12 unmittelbar mit dem Maschinenträger 114 verbinden. Der Maschinenträger 114, die Rotorlagerung 108 mit Rotorwelle 118, die Drehmomentstütze 116 und die Getriebekomponente 12 können als Triebstranglagerung 10 bezeichnet werden.

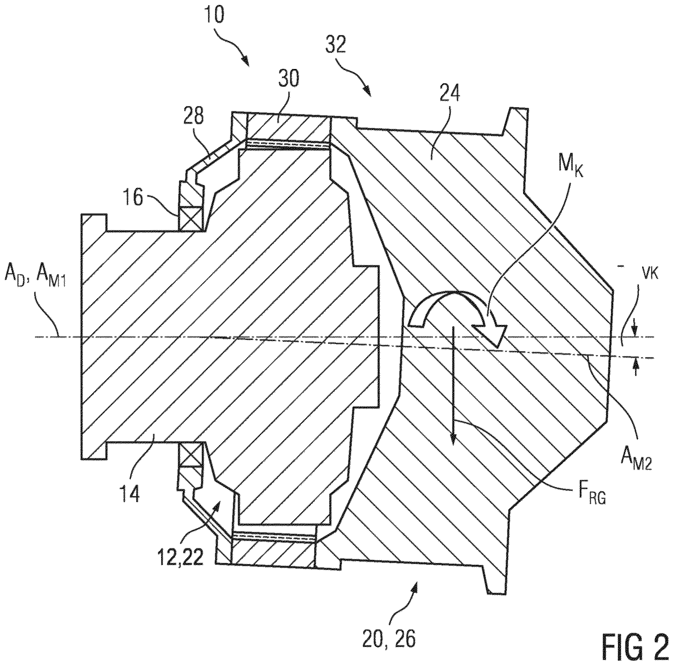

Die Figur 2 zeigt schematisch und auszugsweise einen Getriebeantriebsstrang 10 für eine Windkraftanlage 100, wie beispielsweise in Figur 1 dargestellt, mit einer ersten Getriebekomponente 12 und einer zweiten Getriebekomponente 20. Von der ersten Getriebekomponente 12 ist eine erste Planetenstufe 22 mit einem Planetenträger 14, ein als Flanschabschnitt ausgebildetes erstes Gehäuseelement 28, ein als Hohlrad ausgebildetes zweites Gehäuseelement 30 und eine Lageranordnung 16 dargestellt. Der Planetenträger 14 ist über die Lageranordnung 16 gegenüber dem Flanschabschnitt 28 drehbar um eine Drehachse A_{D} gelagert. Der Flanschabschnitt 28 ist mittelbar über das Hohlrad 30 an einem weiteren Gehäuseelement 32 der zweiten Getriebekomponente 20 gehalten. Die zweite Getriebekomponente 20 weist zumindest eine weitere Planetenstufe 26 auf, kann aber auch alternativ oder zusätzlich eine Stirnradstufe enthalten. Die zweite Getriebekomponente 20 wird nachfolgend auch mit Bezugszeichen 24 versehen als Rumpfgetriebe bezeichnet. Für die ersten Getriebekomponente 12 und das Rumpfgetriebe 24 können jeweilige komponenteneigene Mittelachsen A_{M1} und A_{M2} definiert werden.

Durch das aus der Gewichtskraft F_{RG} des Rumpfgetriebes 24 resultierende Kippmoment M_{K} und infolge eines Lagerspiels und einer Nachgiebigkeit der Lageranordnung 16 erfährt das Rumpfgetriebe 24 ein winkliges Abkippen. Dieses winklige Abkippen ist in der Figur 2 dargestellt. Die Mittelachse A_{M2} des Rumpfgetriebes 24 ist folglich um einen Winkel -α_{VK} bezogen auf die Mittelachse A_{M1} der ersten Getriebekomponente 12 nach unten abgekippt. Die abgekippte Mittelachse A_{M2} des Rumpfgetriebes 24 ist mit der Bezeichnung -α_{VK} bezeichnet, wobei der Betrag des Winkels α_{VK} die Lage der Mittelachse A_{M2} des Rumpfgetriebes 24 zu der Mittelachse A_{M1} der ersten Getriebekomponente 12 beschreibt. Das negative Vorzeichen des Winkels α_{VK} beschreibt die Orientierung, in der die Mittelachse A_{M2} zu der Mittelachse A_{M1} steht, nämlich ausgehend von einem Schnittpunkt zwischen Mittelachse A_{M1} und Mittelachse A_{M2} ist die Mittelachse A_{M2} in der Richtung des Rumpfgetriebes 24 nach vertikal unten geneigt.

Das Kippmoment ist mit M_{K} bezeichnet. Das winklige Abkippen -α_{VK} führt zu einer Verkippung der Verzahnung in der Planetenstufe 22, insbesondere zwischen Hohlrad 30 und Planetenträger 14. Für die hier vorgenommene Betrachtung des winkligen Abkippens infolge der Gewichtskraft F_{RG} des Rumpfgetriebes 24 und des resultierenden Kippmoment M_{K} wird von einer festen bzw. unveränderten Position des Planetenträgers 14 ausgegangen.

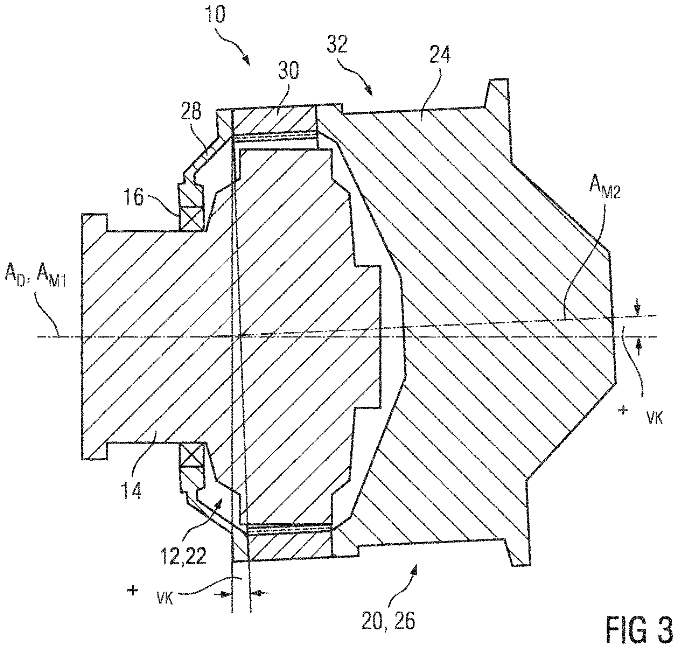

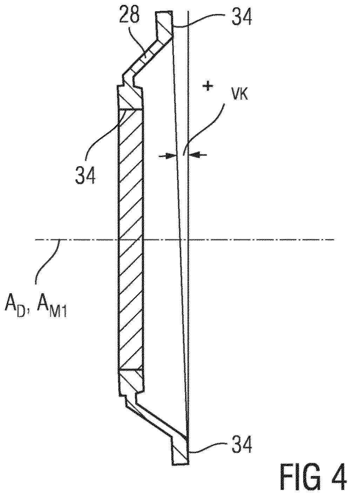

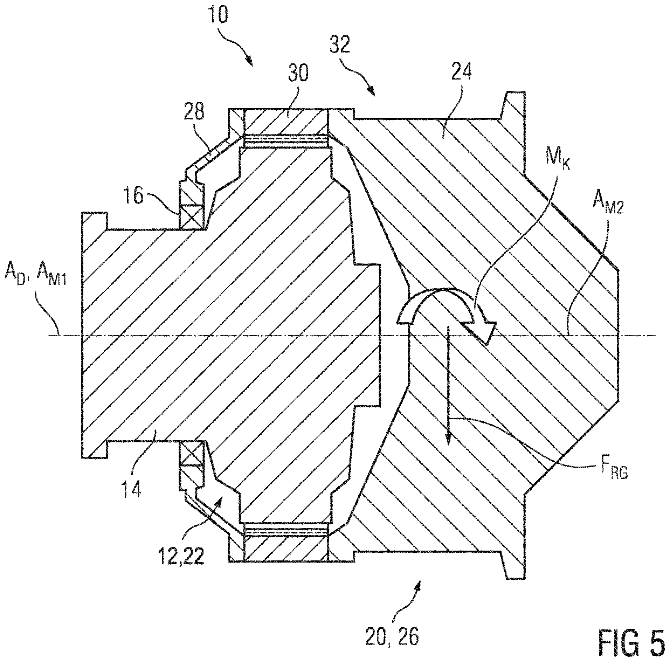

Die Figuren 3, 4 und 5 zeigen eine erste Ausführung eines Getriebeantriebsstrang 10 zur Kompensation des winkligen Abkippens infolge der Gewichtskraft F_{RG} des Rumpfgetriebes 24. Die Figur 3 zeigt den unbelasteten Zustand, in dem das Rumpfgetriebe 24 nicht von der eigenen Gewichtskraft belastet ist, so dass es keine Verformungen infolge von Materialnachgiebigkeiten gibt. Die Mittelachse A_{M2} des Rumpfgetriebes 24 ist folglich um einen Winkel +α_{VK} bezogen auf die Mittelachse A_{M1} der ersten Getriebekomponente 12 nach oben geneigt. In der Figur 4 ist ein Flanschabschnitt 28 gezeigt, der derart ausgeführt ist, dass sich die Mittelachse A_{M2} des Rumpfgetriebes 24 um den Winkel +α_{VK} nach oben positioniert. Der Flanschabschnitt 28 weist eine Anlagefläche 34 auf, die unter dem Winkel von 90°+(α_{VK}) zu der Mittelachse A_{M1} steht. Da vorliegend das Rumpfgetriebe 24 mittelbar über das Hohlrad 30 über die Anlagefläche 34 mit dem Flanschabschnitt 28 verbunden ist, steht die Mittelachse A_{M2} des Rumpfgetriebes 24 unter dem Winkel +α_{VK} bezogen auf die Mittelachse A_{M1}. Alternativ kann die Anlagefläche 34 auch auf der dem Flanschabschnitt 28 zugewandten Stirnseite des Hohlrades vorgesehen sein, wobei die Anlagefläche 34 auf dem Hohlrad unter einem Winkel 90°-(α_{VK}) bezogen auf die Mittelachse A_{M1} steht. In der Figur 5 ist der belastete Zustand gezeigt, in dem das Rumpfgetriebe 24 durch das aus der Gewichtskraft F_{RG} resultierende Kippmoment M_{K} ein winkliges Abkippen nach unten erfährt. Infolge der in Figur 4 gezeigten Ausführung des Flanschabschnitts 28 liegt die Mittelachse A_{M2} des Rumpfgetriebes 24 nun koaxial zu der Mittelachse A_{M1} der ersten Getriebekomponente 12 und koaxial zu der Triebstrangachse A_{D}. Dieser koaxiale Verlauf der beiden Mittelachsen A_{M1} und A_{M2} zueinander stellt sicher, dass es zu keiner Verkippung der Verzahnung in der Planetenstufe 22, insbesondere zwischen Hohlrad 30 und Planetenträger 14 kommt.

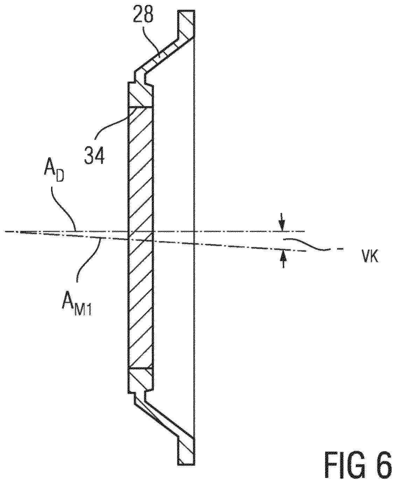

Die Figur 6 zeigt eine weitere mögliche Ausführung des Flanschabschnitts 28. Hierbei ist die Anlagefläche 34 als eine Bohrung zur Aufnahme der Lagerung 16 für den Planetenradträger 14 ausgeführt, wobei die Bohrung nicht koaxial, sondern innerhalb des Flanschabschnitts 28 geneigt angeordnet ist. Die Mittelachse A_{M1} wird hier durch die Anlagefläche 34 bzw. die Bohrung bestimmt und steht unter dem Winkel -α_{VK} zu der Triebstrangachse A_{D}. Folglich herrscht im unbelasteten Zustand eine Verkippung der Verzahnung in der Planetenstufe 22 und eine Neigung nach oben - Winkel -α_{VK} - wie dies in der Figur 3 dargestellt wurde. In dem belasteten Zustand ist dann das Rumpfgetriebe 24 durch das aus der Gewichtskraft F_{RG} resultierende Kippmoment M_{K} nach unten abgekippt, so dass sich die in Figur 5 gezeigte Position einstellt, in der die Mittelachse A_{M2} des Rumpfgetriebes 24 koaxial zu der Mittelachse A_{M1} der ersten Getriebekomponente 12 und koaxial zu der Triebstrangachse A_{D} verläuft.

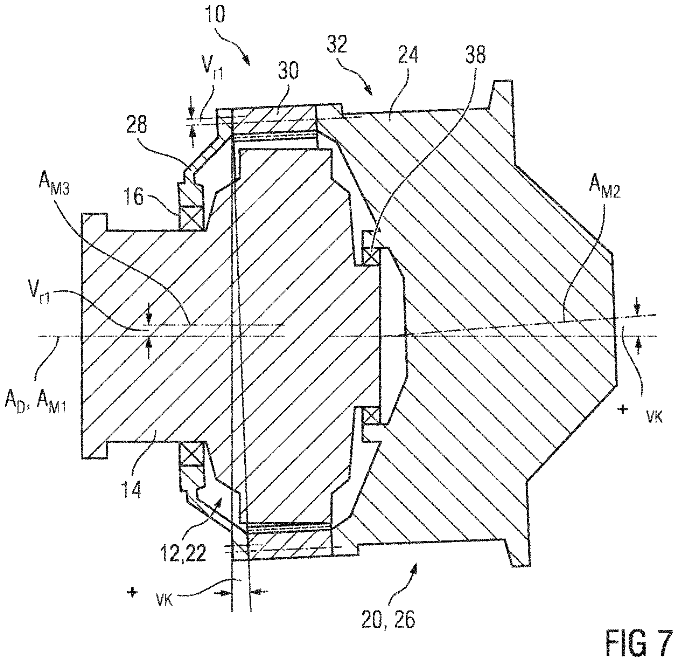

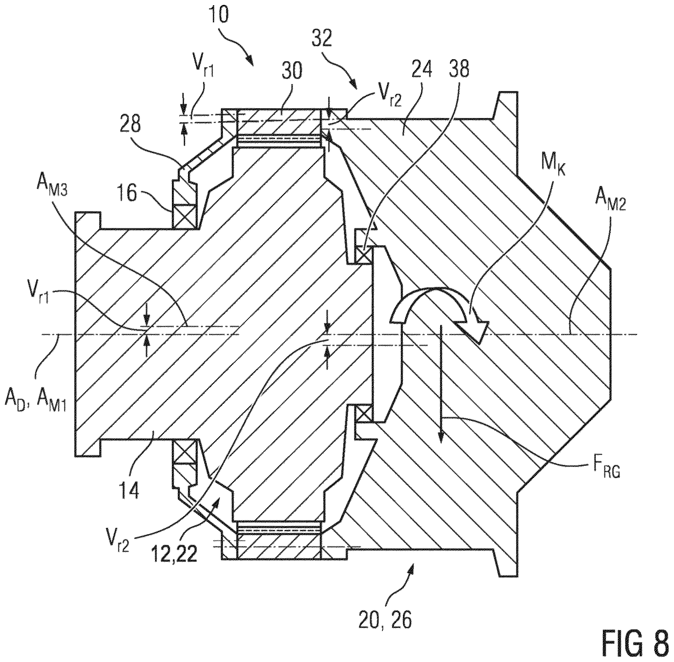

Die Figuren 7 und 8 zeigen eine weitere Ausführung eines Getriebeantriebsstrang 10 zur Kompensation des winkligen Abkippens infolge der Gewichtskraft F_{RG} des Rumpfgetriebes 24. Der grundsätzliche Aufbau des Getriebeantriebsstrangs 10 ist gegenüber der Beschreibung zu Figur 2 bezüglich der Lagerung des Planetenradträgers 14 verändert. Der Planetenradträger 14 ist über eine weitere Lageranordnung 38 gegenüber dem Rumpfgetriebe 24 gelagert.

Die Figur 7 zeigt zunächst den unbelasteten Zustand, in dem das Rumpfgetriebe 24 nicht von der eigenen Gewichtskraft belastet ist, so dass es keine Verformungen infolge von Materialnachgiebigkeiten gibt (vgl. Figur 3). Eine Mittelachse A_{M3} des Hohlrades 30 weist einen radialen Versatz Vᵣ₁ gegenüber dem um die Mittelachse A_{M1} angeordneten Flanschabschnitt 28 auf. Der radiale Versatz Vᵣ₁ des Hohlrades 30 gegenüber dem Flanschabschnitt 28 ist nach vertikal oben erfolgt. Infolge der Nachgiebigkeiten u.a. in den Lageranordnungen 16 und 38 neigt sich das Rumpfgetriebe 24 nach vertikal oben und dessen Mittelachse A_{M2} ist um einen Winkel +α_{VK} bezogen auf die Mittelachse A_{M1} der ersten Getriebekomponente 12 nach oben geneigt. In der Figur 8 ist der belastete Zustand gezeigt, in dem das Rumpfgetriebe 24 durch das aus der Gewichtskraft F_{RG} resultierende Kippmoment M_{K} ein winkliges Abkippen nach unten erfährt. Die Mittelachse A_{M2} des Rumpfgetriebes 24 verläuft nun koaxial zu der Mittelachse A_{M1} der ersten Getriebekomponente 12 und koaxial zu der Triebstrangachse A_{D}. Die Mittelachse A_{M1} und die Mittelachse A_{M3} haben weiterhin den radialen Versatz Vᵣ₁ zueinander. Der koaxiale Verlauf der beiden Mittelachsen A_{M1} und A_{M2} zueinander stellt sicher, dass es zu keiner Verkippung der Verzahnung in der Planetenstufe 22, insbesondere zwischen Hohlrad 30 und Planetenträger 14 kommt.

Bei einer weiteren Variante mit radialem Versatz kann alternativ oder zusätzlich vorgesehen sein, dass die Mittelachse A_{M2} der zweiten Getriebekomponente 20 einen radialen Versatz Vᵣ₂ gegenüber dem um die Mittelachse A_{M1} angeordneten Flanschabschnitt 28 aufweist. Der radiale Versatz Vᵣ₂ ist hier nach vertikal unten erfolgt. Hierbei ergeben sich die gleichen Verhältnisse wie zu den Figuren 7 und 8 beschrieben.

### Bezugszeichenliste

- 10: Getriebeantriebsstrang
- 12: Getriebekomponente
- 14: Planetenradträger
- 16: Lageranordnung
- 20: Getriebekomponente
- 22: Planetenstufe
- 24: Rumpfgetriebe
- 26: Planetenstufe
- 28: Gehäuseelement
- 30: Gehäuseelement
- 32: Gehäuseelement
- 34: Anlagefläche
- 36: Bohrung
- 38: Lageranordnung
- 100: Windkraftanlage
- 102: Antriebstrang
- 104: Rotorflansch
- 106: Mehrblattrotor
- 108: Rotorlagerung
- 112: Generator
- 114: Maschinenträger
- 116: Drehmomentstütze
- 118: Rotorwelle
- 120: Rotorlagergehäuse
- 124: Generatorwelle
- 126: Flansch

## Patentansprüche

1. Getriebeantriebsstrang (10) mit einer Triebstrangachse (A_{D}) für eine Windkraftanlage, umfassend
eine erste und zumindest eine weitere Getriebekomponente (12, 20) mit jeweils einer Mittelachse (A_{M1}, A_{M2}), wobei die ersten Getriebekomponente (12) zumindest einen Planetenradträger (14) mit darin aufgenommenen Planetenräder einer ersten Planetenstufe (22), ein erstes Gehäuseelement (28) als Flanschabschnitt mit einer aufgenommenen Lagerung (16) für den Planetenradträger (14) und ein zweites Gehäuseelement (30) als Hohlrad aufweist und die zweite Getriebekomponente (20) zumindest eine weitere Planeten- und/oder Stirnradstufe (26) aufweist,
**dadurch gekennzeichnet, dass** in einem unbelasteten Zustand, in der eine Gewichtskraft F_{RG} der zumindest einen weiteren Getriebekomponente (20) nicht auf diese Getriebekomponente (20) wirksam ist, die Mittelachse (A_{M2}) der zumindest einen weiteren Getriebekomponente (20) unter einem Winkelbetrag (+α_{VK}) zu der Triebstrangachse (A_{D}) steht.

2. Getriebeantriebsstrang (10) nach Anspruch 1, **dadurch gekennzeichnet, dass** die Mittelachse (A_{M2}) ausgehend von einem Schnittpunkt mit der Mittelachse (A_{M1}) in der Richtung der zumindest zweiten Getriebekomponente (20) gegenüber A_{M1} im Gegenuhrzeigersinn geneigt ist.

3. Getriebeantriebsstrang (10) nach Anspruch 1 oder 2, **dadurch gekennzeichnet, dass** der um die Mittelachse (A_{M1}) angeordnete Flanschabschnitt (28) oder das Hohlrad (30) eine Anlagefläche (34) aufweist und die Anlagefläche (34) unter dem Winkelbetrag 90°+(α_{VK}) oder 90°-(α_{VK}) oder unter dem Winkelbetrag (-α_{VK}) oder unter dem Winkelbetrag (+α_{VK}) zu der Triebstrangachse A_{D} steht.

4. Getriebeantriebsstrang (10) nach einem der Ansprüche 1 bis 3, **dadurch gekennzeichnet, dass** der Flanschabschnitt (28) über die unter dem Winkelbetrag 90°+(α_{VK}) zu der Triebstrangachse A_{D} stehenden Anlagefläche (34) an dem Hohlrad (30) befestigt ist.

5. Getriebeantriebsstrang (10) nach einem der Ansprüche 1 bis 3, **dadurch gekennzeichnet, dass** es sich bei der unter dem Winkelbetrag (-α_{VK}) oder unter dem Winkelbetrag (+α_{VK}) zu der Triebstrangachse A_{D} stehenden Anlagefläche (34) des Flanschabschnitt (28) um eine Bohrung zur Aufnahme der Lagerung (16) für den Planetenradträger (14) handelt.

6. Getriebeantriebsstrang (10) nach einem der Ansprüche 1 bis 5, **dadurch gekennzeichnet, dass** der Planetenradträger (14) über ein einseitiges Führungslager (16) in dem als Flanschabschnitt ausgeführten ersten Gehäuseelement (28) oder auf der dem ersten Gehäuseelement (28) abgewandten Seite in dem Gehäuseelement (32) gelagert ist.

7. Getriebeantriebsstrang (10) nach Anspruch 1 oder 2, **dadurch gekennzeichnet, dass** eine Mittelachse (A_{M3}) des Hohlrades (30) einen ersten radialen Versatz (Vᵣ₁) gegenüber dem um die Mittelachse (A_{M1}) angeordneten Flanschabschnitt (28) aufweist.

8. Getriebeantriebsstrang (10) nach Anspruch 1, 2 oder 7, **dadurch gekennzeichnet, dass** die Mittelachse (A_{M2}) der zweiten Getriebekomponente (20) einen zweiten radialen Versatz (Vᵣ₂) gegenüber dem um die Mittelachse (A_{M1}) angeordneten Flanschabschnitt (28) aufweist.

9. Getriebeantriebsstrang (10) nach Anspruch 8, **dadurch gekennzeichnet, dass** der erste radiale Versatz (Vᵣ₁) entgegengesetzt zu dem zweiten radialen Versatz (Vᵣ₂) gerichtet ist.

10. Getriebeantriebsstrang (10) nach einem der Ansprüche 1, 2 oder 7 bis 9, dass der Planetenradträger (14) der ersten Getriebekomponente (12) über eine weitere Lagerung (38) gegenüber der zweiten Getriebekomponente (20) gelagert ist.

11. Windkraftanlage (100), umfassend einen Rotorflansch (104) mit einem Rotor (106) und einen Generator (112), wobei ein den Rotorflansch (104) mit dem Generator (112) verbindender Getriebeantriebsstrang (10) vorgesehen ist, **dadurch gekennzeichnet, dass** der Getriebeantriebsstrang (10) nach einem der vorangegangenen Ansprüche ausgebildet ist.
